# EUROPEAN PATENT APPLICATION

(11) **EP 4 459 819 A1**
(43) Date of publication of application: **06.11.2024**
(21) Application number: 22924938.8
(22) Date of filing: 31.10.2022
(51) Int. Cl.: H02J 1/00, H02J 5/00

(54) **CHARGING SYSTEM, CHARGING METHOD, AND PROGRAM**

(30) Priority: 04.02.2022 JP 2022016083
(71) Applicant: Mitsubishi Heavy Industries, Ltd., Tokyo 100-8332 (JP)
(72) Inventor: SANADA, Tomohiko, Tokyo 100-8332 (JP); IIDA, Ryo, Tokyo 100-8332 (JP)
(74) Representative: Studio Torta S.p.A.
(86) International application number: PCT/JP2022/040600
(87) International publication number: WO 2023/149033

(57) **Abstract**

This charging system is connected between the two terminals of at least one capacitor in the input of a plurality of power converters and charges the capacitor when a first switching element and a second switching element are turned off.

## Description

### Technical Field

The present disclosure relates to a charging system, a charging method, and a program.

Priority is claimed on Japanese Patent Application No. 2022-016083, filed February 4, 2022, the content of which is incorporated herein by reference.

### Background Art

In a limited space such as a ship, it is required to effectively utilize energy. PTL 1 discloses, as a related technique, a technique relating to a marine electric propulsion device capable of obtaining an energy saving effect.

### Citation List

### Patent Literature

[PTL 1] Japanese Unexamined Patent Application Publication No. 2008-024187

### Summary of Invention

### Technical Problem

In a limited space such as a ship, it is desired that the amount of power interchange between direct current microgrids is large. On the other hand, in many cases, a large capacity bus tie capacitor is used in the direct current microgrid, and in this case, there is a possibility that the direct current microgrid cannot operate appropriately due to an inappropriate bias state caused by the capacitor in the direct current microgrid not being charged. On the other hand, when the capacitor in the direct current microgrid is charged via the bus tie capacitor, it takes time to charge the capacitor due to the large capacity of the bus tie capacitor. Therefore, there is a need for a technique that can improve charging of capacitors in a direct current microgrid in the presence of bus tie capacitors.

The present disclosure has been made to solve the above problem, and an object of the present disclosure is to provide a charging system, a charging method, and a program capable of improving charging of a capacitor in a direct current microgrid when a bus tie capacitor is present.

### Solution to Problem

In order to solve the above problem, a charging system according to the present disclosure includes a first fuse having a first terminal connected to positive electrode wiring of a bus to which another cooperated direct current microgrid is connected and a second terminal connected to the positive electrode wiring of the bus to which a plurality of power converters are connected via a plurality of fuses, a second fuse having a first terminal connected to negative electrode wiring of the bus to which the other direct current microgrid is connected and a second terminal connected to the negative electrode wiring of the bus to which the plurality of power converters are connected via a plurality of fuses, and a first capacitor having a first terminal connected to the positive electrode wiring of the bus to which the other direct current microgrid is connected, a second terminal connected to the negative electrode wiring of the bus to which the other direct current microgrid is connected, and a capacitance capable of cutting at least one of the first fuse and the second fuse, in which each of the plurality of power converters includes a bridge circuit that generates alternating current power from direct current power supplied by the positive electrode wiring of the bus to which the plurality of power converters are connected and the negative electrode wiring of the bus to which the plurality of power converters are connected, a second capacitor that is provided parallel to an input terminal of the bridge circuit and that smooths the direct current power, a first switching element that is provided between the positive electrode wiring of the bus to which the plurality of power converters are connected and the bridge circuit, and a first path that is provided parallel to the first switching element and that has a second switching element and a resistor connected in series with the second switching element, and the charging system further includes a charging circuit that is connected between both terminals of the second capacitor of at least one of the plurality of power converters and that charges the second capacitor when the first switching element and the second switching element are turned off.

A charging method according to the present disclosure includes, via a charging system including a first fuse having a first terminal connected to positive electrode wiring of a bus to which another cooperated direct current microgrid is connected and a second terminal connected to the positive electrode wiring of the bus to which a plurality of power converters are connected via a plurality of fuses, a second fuse having a first terminal connected to negative electrode wiring of the bus to which the other direct current microgrid is connected and a second terminal connected to the negative electrode wiring of the bus to which the plurality of power converters are connected via a plurality of fuses, and a first capacitor having a first terminal connected to the positive electrode wiring of the bus to which the other direct current microgrid is connected, a second terminal connected to the negative electrode wiring of the bus to which the other direct current microgrid is connected, and a capacitance capable of cutting at least one of the first fuse and the second fuse, in which each of the plurality of power converters includes a bridge circuit that generates alternating current power from direct current power supplied by the positive electrode wiring of the bus to which the plurality of power converters are connected and the negative electrode wiring of the bus to which the plurality of power converters are connected, a second capacitor that is provided parallel to an input terminal of the bridge circuit and that smooths the direct current power, a first switching element that is provided between the positive electrode wiring of the bus to which the plurality of power converters are connected and the bridge circuit, and a first path that is provided parallel to the first switching element and that has a second switching element and a resistor connected in series with the second switching element, charging the second capacitor when the charging system is connected between both terminals of the second capacitor of at least one of the plurality of power converters and the first switching element and the second switching element are turned off.

A program according to the present disclosure causes a charging circuit of a charging system including a first fuse having a first terminal connected to positive electrode wiring of a bus to which another cooperated direct current microgrid is connected and a second terminal connected to the positive electrode wiring of the bus to which a plurality of power converters are connected via a plurality of fuses, a second fuse having a first terminal connected to negative electrode wiring of the bus to which the other direct current microgrid is connected and a second terminal connected to the negative electrode wiring of the bus to which the plurality of power converters are connected via a plurality of fuses, and a first capacitor having a first terminal connected to the positive electrode wiring of the bus to which the other direct current microgrid is connected, a second terminal connected to the negative electrode wiring of the bus to which the other direct current microgrid is connected, and a capacitance capable of cutting at least one of the first fuse and the second fuse, in which each of the plurality of power converters includes a bridge circuit that generates alternating current power from direct current power supplied by the positive electrode wiring of the bus to which the plurality of power converters are connected and the negative electrode wiring of the bus to which the plurality of power converters are connected, a second capacitor that is provided parallel to an input terminal of the bridge circuit and that smooths the direct current power, a first switching element that is provided between the positive electrode wiring of the bus to which the plurality of power converters are connected and the bridge circuit, and a first path that is provided parallel to the first switching element and that has a second switching element and a resistor connected in series with the second switching element, to execute charging the second capacitor when the charging circuit is connected between both terminals of the second capacitor of at least one of the plurality of power converters and the first switching element and the second switching element are turned off.

### Advantageous Effects of Invention

According to a charging system, a charging method, and a program according to the present disclosure, it is possible to improve charging of a capacitor in a direct current microgrid when a bus tie capacitor is present.

### Brief Description of Drawings

Fig. 1 is a diagram showing an example of a configuration of a charging system according to the embodiment of the present disclosure.
Fig. 2 is a diagram showing an example of a first processing flow of a charging system according to the embodiment of the present disclosure.
Fig. 3 is a first diagram for describing charging of a capacitor according to the embodiment of the present disclosure.
Fig. 4 is a second diagram for describing charging of a capacitor according to the embodiment of the present disclosure.
Fig. 5 is a diagram showing an example of a second processing flow of a charging system according to the embodiment of the present disclosure.
Fig. 6 is a first diagram for describing charging of a capacitor according to the embodiment of the present disclosure.
Fig. 7 is a second diagram for describing charging of a capacitor according to the embodiment of the present disclosure.
Fig. 8 is a third diagram for describing charging of a capacitor according to the embodiment of the present disclosure.
Fig. 9 is a diagram showing a first example of processing performed by a charging system according to the embodiment of the present disclosure.
Fig. 10 is a diagram showing a second example of processing performed by a charging system according to the embodiment of the present disclosure.
Fig. 11 is a diagram showing a third example of processing performed by a charging system according to the embodiment of the present disclosure.
Fig. 12 is a diagram showing an example of a configuration of a charging system according to a modification example of the embodiment of the present disclosure.
Fig. 13 is a schematic block diagram showing a configuration of a computer according to at least one embodiment.

### Description of Embodiments

### <Embodiment>

Hereinafter, an embodiment will be described in detail with reference to the drawings.

A charging system according to one embodiment of the present disclosure will be described.

### (Configuration of Charging System)

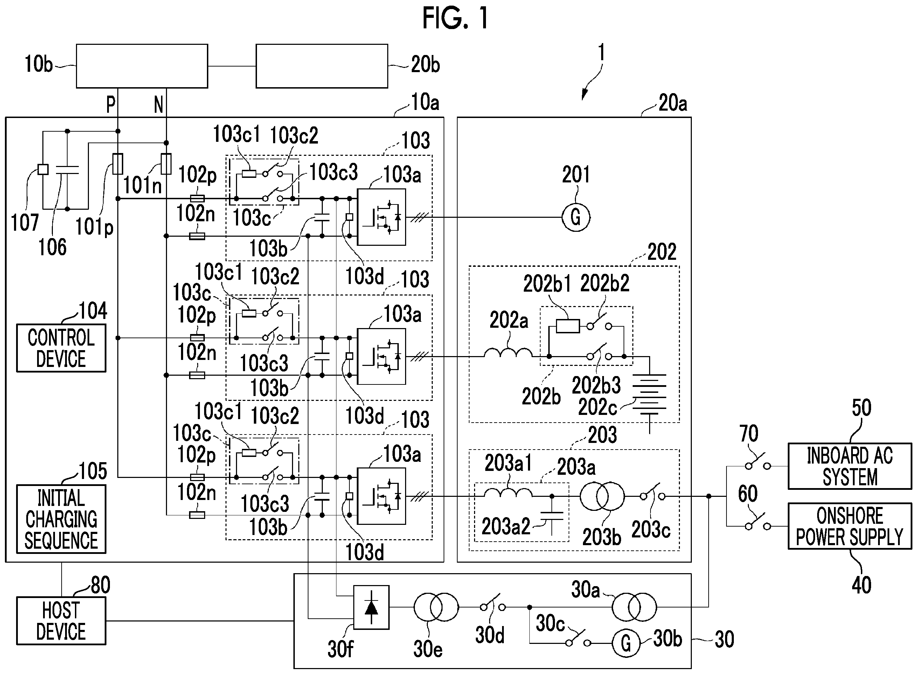

Fig. 1 is a diagram showing an example of a configuration of a charging system 1 according to the embodiment of the present disclosure.

As illustrated in Fig. 1, the charging system 1 includes direct current microgrids 10a and 10b, loads 20a and 20b, a charging circuit 30, an onshore power supply 40, an inboard AC system 50, switching elements 60 and 70, and a host device 80. The charging system 1 is, for example, a system used in a ship. In the charging system 1, the direct current microgrids 10a and 10b cooperate with each other. The charging system 1 is a system that can improve charging of capacitors in a direct current micro grid in the presence of bus tie capacitors.

As illustrated in Fig. 1, the direct current microgrid 10a includes bus tie fuses 101p (an example of a first fuse) and 101n (an example of a second fuse), a plurality of fuses 102p and 102n, a plurality of power converters 103, a control device 104, an initial charging sequence 105, a capacitor 106 (an example of a first capacitor), and a voltage sensor 107.

The number of fuses 102p and 102n is the same as the number of power converters 103, and is three in the example shown in Fig. 1.

The bus tie fuse 101p is a fuse provided in the positive electrode wiring P of the bus in the charging system 1.

The bus tie fuse 101n is a fuse provided in the negative electrode wiring N of the bus in the charging system 1.

As shown in Fig. 1, each of the plurality of fuses 102p is provided between the positive electrode wiring P and one of the plurality of power converters 103.

As shown in Fig. 1, each of the plurality of fuses 102n is provided between the negative electrode wiring N and one of the plurality of power converters 103.

As shown in Fig. 1, each of the plurality of power converters 103 is connected to the positive electrode wiring P via one fuse 102p.

As shown in Fig. 1, each of the plurality of power converters 103 is connected to the negative electrode wiring N via one fuse 102n. As shown in Fig. 1, each of the plurality of power converters 103 is connected to the load 20a.

As illustrated in Fig. 1, each of the plurality of power converters 103 includes a bridge circuit 103a, a capacitor 103b (an example of a second capacitor), a switching circuit 103c, and a voltage sensor 103d.

The bridge circuit 103a is a circuit that generates three-phase alternating current power from direct current power.

The bridge circuit 103a is configured using, for example, transistors. Examples of the transistors include power semiconductor elements such as silicon carbide metal oxide semiconductor field effect transistors (SiCMOSFETs) or insulated gate bipolar transistors (IGBTs).

The capacitor 103b smooths the DC voltage input to the bridge circuit 103a.

The switching circuit 103c is a circuit that switches connection between the bridge circuit 103a and the positive electrode wiring P of the bus. As shown in Fig. 1, the switching circuit 103c includes a resistor 103c1 and switching elements 103c2 and 103c3. The resistor 103c1 and the switching element 103c2 are connected in series. The switching element 103c3 is connected parallel to the resistor 103c1 and the switching element 103c2 connected in series. Examples of the switching elements 103c2 and 103c3 include power semiconductor elements such as SiCMOSFETs and IGBTs, and physical switches. The voltage sensor 103d detects a potential difference between both ends of the capacitor 103b included in each of the power converters 103.

The control device 104 controls the power converter 103 under the control of the host device 80.

The initial charging sequence 105 controls the state of charge in the initial operation of the generator G in the load 20a. The capacitor 106 accumulates a charge capable of cutting the bus tie fuses 101p and 101n. The voltage sensor 107 detects a potential difference between the positive electrode wiring P and the negative electrode wiring N of the bus, that is, a potential difference between both ends of the capacitor 106. Each of the plurality of power converters 103 may include the control device 104, and the control device 104 may control each processing in the power converter 103.

As illustrated in Fig. 1, the load 20a includes a generator 201, a charging device 202, and a voltage conversion device 203.

The generator 201 generates power. As illustrated in Fig. 1, the charging device 202 includes a DCL 202a, a switching circuit 202b, and a battery 202c. As shown in Fig. 1, the switching circuit 202b includes a resistor 202b1 and switching elements 202b2 and 202b3. The resistor 202b1 and the switching element 202b2 are connected in series. The switching element 202b3 is connected parallel to the resistor 202b1 and the switching element 202b2 connected in series. Examples of the switching elements 202b2 and 202b3 include power semiconductor elements such as SiCMOSFETs and IGBTs, and physical switches.

As illustrated in Fig. 1, the voltage conversion device 203 includes a filter 203a, an alternative current to alternative current (AC-AC) converter 203b, and a switching element 203c.

The filter 203a includes a reactor 203a1 and a capacitor 203a2. The filter 203a removes high-frequency components. The AC-AC converter 203b converts the alternating current voltage into an alternating current voltage having another voltage amplitude. Examples of the AC-AC converter 203b include a transformer. The switching element 203c determines whether to connect to the onshore power supply 40. Specifically, when the switching element 203c is in the ON state, the load 20a is connected to the onshore power supply 40. When the switching element 203c is in the OFF state, the load 20a is not connected to the onshore power supply 40.

As shown in Fig. 1, the charging circuit 30 includes AC-AC converters 30a and 30e, a generator 30b, switching elements 30c and 30d, and a rectification circuit 30f.

The AC-AC converter 30a converts the alternating current voltage into an alternating current voltage having another voltage amplitude.

Examples of the AC-AC converter 30a include a transformer. The AC-AC converter 30a steps down the voltage output from the onshore power supply 40 to the voltage output from the generator 30b.

The generator 30b generates power.

The generator 30b is, for example, a portable generator, a small generator, or the like.

The switching elements 30c and 30d are elements for selecting whether the power source used for charging in the charging circuit 30 is the generator 30b or the onshore power supply 40.

When the switching element 60 is in the OFF state and the switching elements 30c and 30d are in the ON state, the power source used for charging in the charging circuit 30 is the generator 30b. When the switching element 60 is in the ON state, the switching element 30c is in the OFF state, and the switching element 30d is in the ON state, the power source used for charging in the charging circuit 30 is the onshore power supply 40.

The AC-AC converter 30e converts the alternating current voltage into an alternating current voltage having another voltage amplitude.

Examples of the AC-AC converter 30e include a transformer. This AC-AC converter 30e is common to both the generator 30b and the onshore power supply 40.

The rectification circuit 30f rectifies the alternating current voltage output from the AC-AC converter 30e and charges at least one of the capacitors 103b included in the plurality of power converters 103.

This charging is continued until the voltage sensor 103d detects a predetermined voltage.

The onshore power supply 40 is a power supply provided on shore.

For example, when a ship including the charging system 1 docks, power is supplied from the onshore power supply 40 to the ship. The inboard AC system 50 is a terminal connected to an alternating current power system in the ship and capable of inputting and outputting power. The switching element 60 is an element that determines whether the onshore power supply 40 can be connected to any one of the load 20a, the charging circuit 30, and the inboard AC system 50. The switching element 70 is an element that determines whether the inboard AC system 50 can be connected to any one of the load 20a, the charging circuit 30, and the onshore power supply 40. The host device 80 controls information of the entire charging system 1, acquires information of each of the direct current microgrids 10a and 10b, the loads 20a and 20b, the charging circuit 30, the onshore power supply 40, the inboard AC system 50, and the switching elements 60 and 70, and outputs a command to each of the direct current microgrids 10a and 10b, the loads 20a and 20b, the charging circuit 30, the onshore power supply 40, the inboard AC system 50, and the switching elements 60 and 70.

The direct current microgrid 10b has the same configuration as that of the direct current microgrid 10a.

The load 20b is a load connected to each of the power converters 103 of the direct current microgrid 10b. The load 20b may have the same configuration as that of the load 20a, or the load 20b and the load 20a may have different configurations.

### (Processing Performed by Charging System)

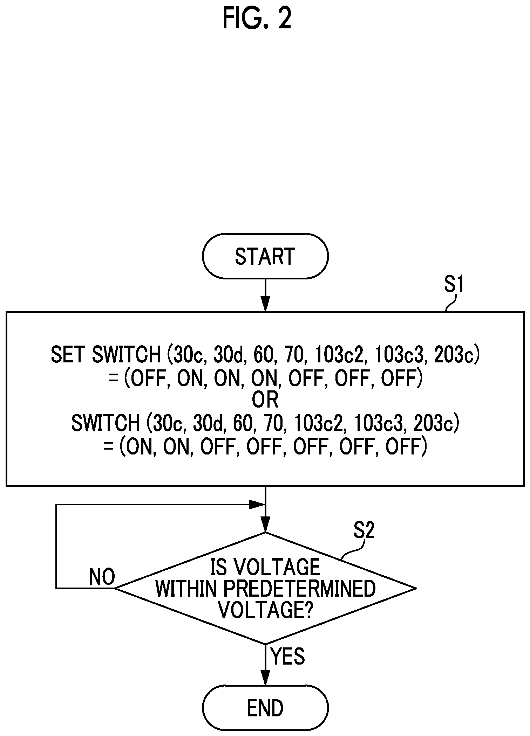

Next, processing performed by the charging system 1 will be described with reference to Figs. 2 to 11.

### (Processing of Charging Capacitor 103b)

First, processing of charging the capacitor 103b of the power converter 103 at the start of the operation of the charging system 1 will be described with reference to Figs. 2 to 4.

Here, it is assumed that switching elements described below are directly or indirectly controlled by the host device 80. Specifically, the switching elements in the direct current microgrid 10a are controlled by the control device 104 under the control of the host device 80, and the load 20a, the charging circuit 30, and the switching elements 60 and 70 are directly controlled by the host device 80.

Fig. 2 is a diagram showing an example of a first processing flow of a charging system 1 according to the embodiment of the present disclosure.

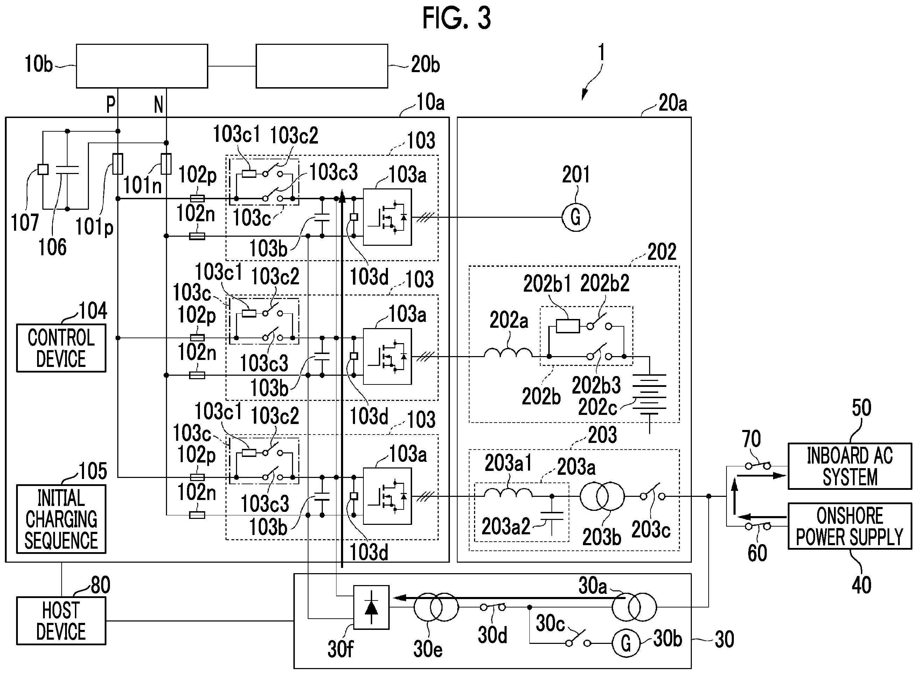

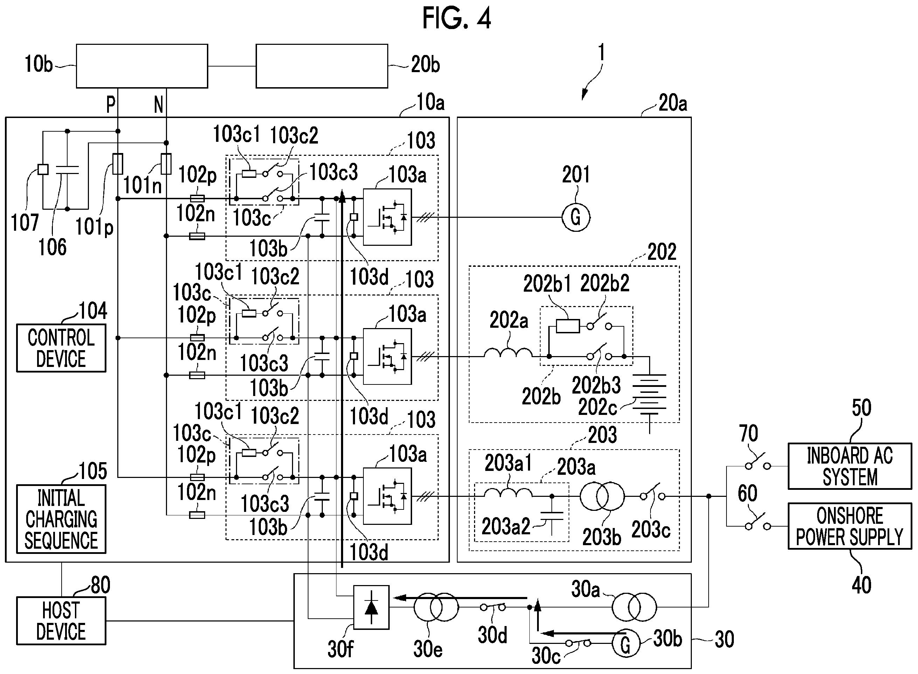

Fig. 3 is a first diagram for describing charging of a capacitor 103b according to the embodiment of the present disclosure. Fig. 4 is a second diagram for describing charging of a capacitor 103b according to the embodiment of the present disclosure. As shown in Fig. 3, the charging circuit 30 is connected to both ends of at least one capacitor 103b. In the example illustrated in Fig. 3, the charging circuit 30 is connected to three capacitors 103b.

As illustrated in Fig. 3, under the control of the host device 80, the control device 104 controls each of the switching elements 103c2 and 103c3 to be in the OFF state in the direct current microgrid 10a, and the host device 80 controls the switching elements 30c and 203c to be in the OFF state and the switching elements 30d, 60, and 70 to be in the ON state (step S1).

Alternatively, as illustrated in Fig. 4, under the control of the host device 80, the control device 104 controls each of the switching elements 103c2 and 103c3 to be in the OFF state in the direct current microgrid 10a, and the host device 80 controls the switching elements 60, 70, and 203c to be in the OFF state and the switching elements 30c and 30d to be in the ON state (step S1).

In this case, a current flows from the charging circuit 30 to the capacitor 103b, and the capacitor 103b is charged.

The host device 80 acquires the potential difference between both ends of the capacitor 103b detected by each voltage sensor 103d, that is, the voltage of the capacitor 103b. The host device 80 determines whether or not the acquired voltage is within a predetermined voltage (step S2). The host device 80 returns to the processing of step S2 for the voltage of capacitor 103b determined that the acquired voltage is not within the predetermined voltage (NO in step S2). The host device 80 ends the processing of charging capacitor 103b for which it is determined that the acquired voltage is within the predetermined voltage (YES in step S2). The above is the processing of charging the capacitor 103b performed by the charging system 1.

### (Processing of Charging Capacitor 106)

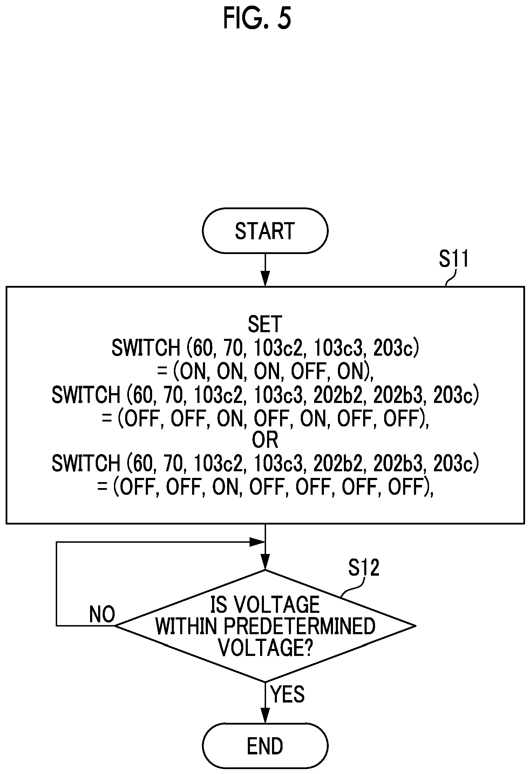

Next, processing of charging the capacitor 106 of the power converter 103 at the start of the operation of the charging system 1 will be described with reference to Figs. 5 to 8.

Fig. 5 is a diagram showing an example of a second processing flow of a charging system 1 according to the embodiment of the present disclosure.

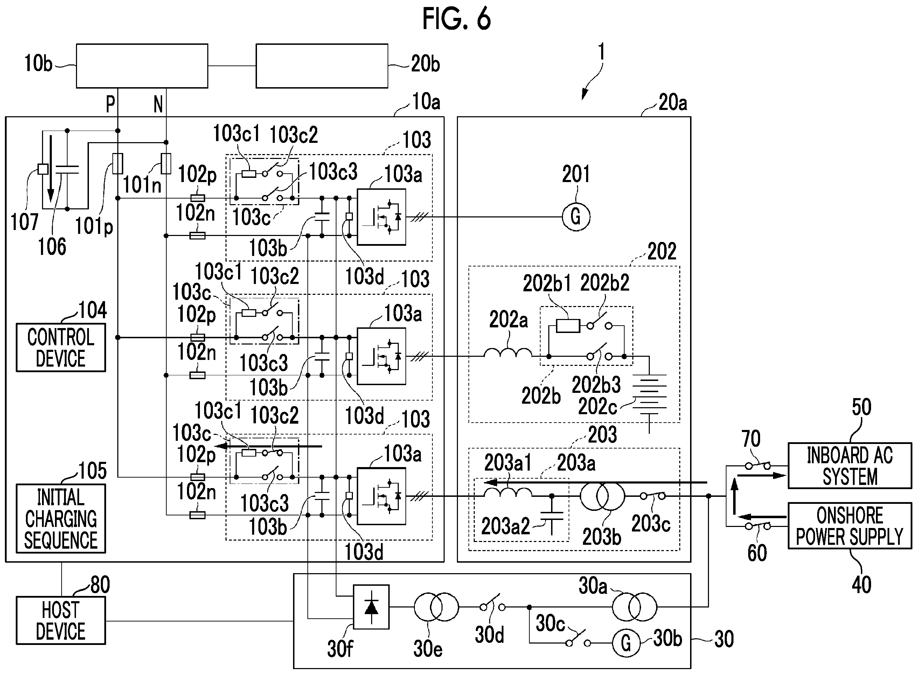

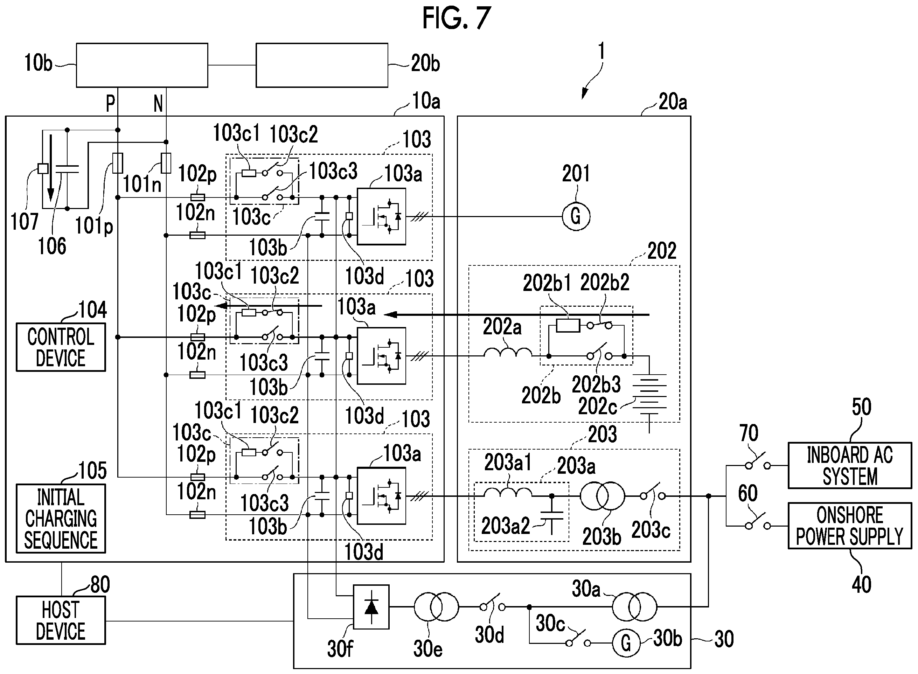

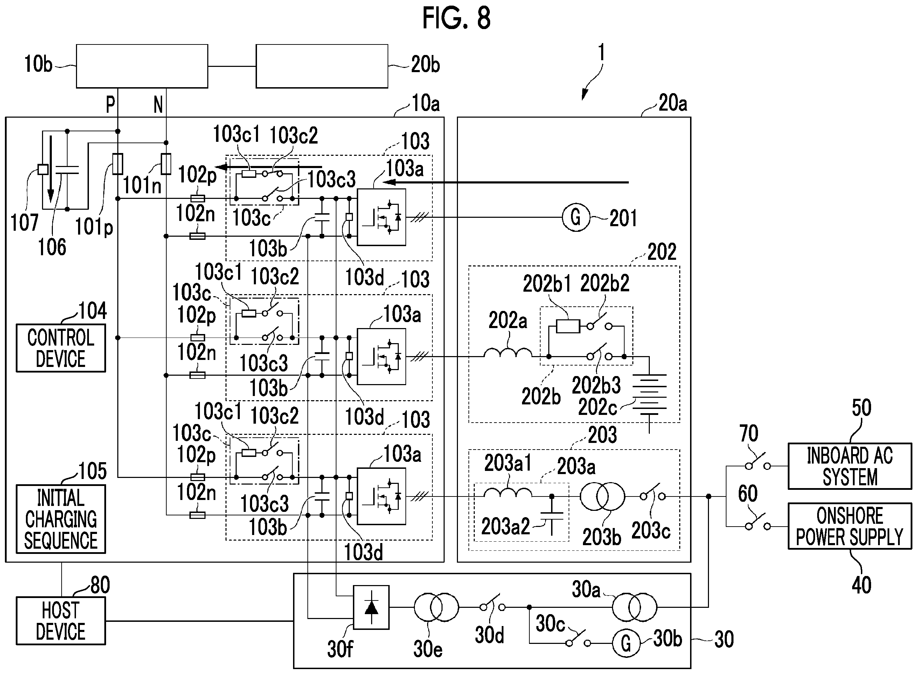

Fig. 6 is a first diagram for describing charging of a capacitor 106 according to the embodiment of the present disclosure. Fig. 7 is a second diagram for describing charging of a capacitor 106 according to the embodiment of the present disclosure. Fig. 8 is a third diagram for describing charging of a capacitor 106 according to the embodiment of the present disclosure. Here, since the charging of the capacitor 103b is completed, it is assumed that the switching elements 30c and 30d are controlled to be in the OFF state.

The capacitor 106 is charged by supplying power from a load.

First, charging of the capacitor 106 when the load shown in Fig. 6 is the voltage conversion device 203 will be described. When the load is the voltage conversion device 203, the host device 80 controls the switching elements 60, 70, and 203c to be in the ON state (step S11). Further, under the control of the host device 80, the control device 104 controls the switching element 103c2 to be in the ON state and the switching element 103c3 to be in the OFF state in the power converter 103 whose load is the voltage conversion device 203 (step S11).

In this case, even when the switching element 103c2 is in the ON state, the charge accumulated in the capacitor 103b is slightly discharged by the resistor 103c1, and the voltage of the capacitor 103b is substantially maintained at a predetermined voltage.

Therefore, a current can flow from the onshore power supply 40 to the direct current microgrid 10a via the voltage conversion device 203 that is a load. In this case, the current flows through the capacitor 106 through the resistor 103c1, the fuse 102p, and the bus tie fuse 101p. That is, the capacitor 106 is charged. The host device 80 acquires the potential difference between both ends of the capacitor 106 detected by the voltage sensor 107, that is, the voltage of the capacitor 106. The host device 80 determines whether or not the acquired voltage is within a predetermined voltage (step S12). The host device 80 returns to the processing of step S12 when it is determined that the acquired voltage is not within the predetermined voltage (NO in step S12). The host device 80 ends the processing of the capacitor 106 when it is determined that the acquired voltage is within the predetermined voltage (YES in step S12).

Next, charging of the capacitor 106 when the load shown in Fig. 7 is the charging device 202 will be described.

When the load is the charging device 202, the host device 80 controls the switching elements 60, 70, 202b3, and 203c to be in the OFF state and controls the switching element 202b2 to be in the ON state (step S11). Further, under the control of the host device 80, the control device 104 controls the switching element 103c2 to be in the ON state and the switching element 103c3 to be in the OFF state in the power converter 103 whose load is the charging device 202 (step S11).

In this case, even when the switching element 103c2 is in the ON state, the charge accumulated in the capacitor 103b is slightly discharged by the resistor 103c1, and the voltage of the capacitor 103b is substantially maintained at a predetermined voltage.

Therefore, a current can flow from the onshore power supply 40 to the direct current microgrid 10a via the charging device 202 that is a load. In this case, the current flows through the capacitor 106 through the resistor 103c1, the fuse 102p, and the bus tie fuse 101p. That is, the capacitor 106 is charged. The host device 80 acquires the potential difference between both ends of the capacitor 106 detected by the voltage sensor 107, that is, the voltage of the capacitor 106. The host device 80 determines whether or not the acquired voltage is within a predetermined voltage (step S12). The host device 80 returns to the processing of step S12 when it is determined that the acquired voltage is not within the predetermined voltage (NO in step S12). The host device 80 ends the processing of the capacitor 106 when it is determined that the acquired voltage is within the predetermined voltage (YES in step S12).

Next, charging of the capacitor 106 when the load shown in Fig. 8 is the generator 201 will be described.

When the load is the generator 201, the host device 80 controls the switching elements 60, 70, 202b2, 202b3, and 203c to be in the OFF state (step S11). Further, under the control of the host device 80, the control device 104 controls the switching element 103c2 to be in the ON state and the switching element 103c3 to be in the OFF state in the power converter 103 whose load is the generator 201 (step S11).

In this case, even when the switching element 103c2 is in the ON state, the charge accumulated in the capacitor 103b is slightly discharged by the resistor 103c1, and the voltage of the capacitor 103b is substantially maintained at a predetermined voltage.

Therefore, a current can flow from the onshore power supply 40 to the direct current microgrid 10a via the generator 201 that is a load. In this case, the current flows through the capacitor 106 through the resistor 103c1, the fuse 102p, and the bus tie fuse 101p. That is, the capacitor 106 is charged. The host device 80 acquires the potential difference between both ends of the capacitor 106 detected by the voltage sensor 107, that is, the voltage of the capacitor 106. The host device 80 determines whether or not the acquired voltage is within a predetermined voltage (step S12). The host device 80 returns to the processing of step S12 when it is determined that the acquired voltage is not within the predetermined voltage (NO in step S 12). The host device 80 ends the processing of the capacitor 106 when it is determined that the acquired voltage is within the predetermined voltage (YES in step S12). The above is the processing of charging the capacitor 106 performed by the charging system 1. At this stage, the charging of the capacitors 103b and 106 is completed.

### (Processing After Charging Capacitor)

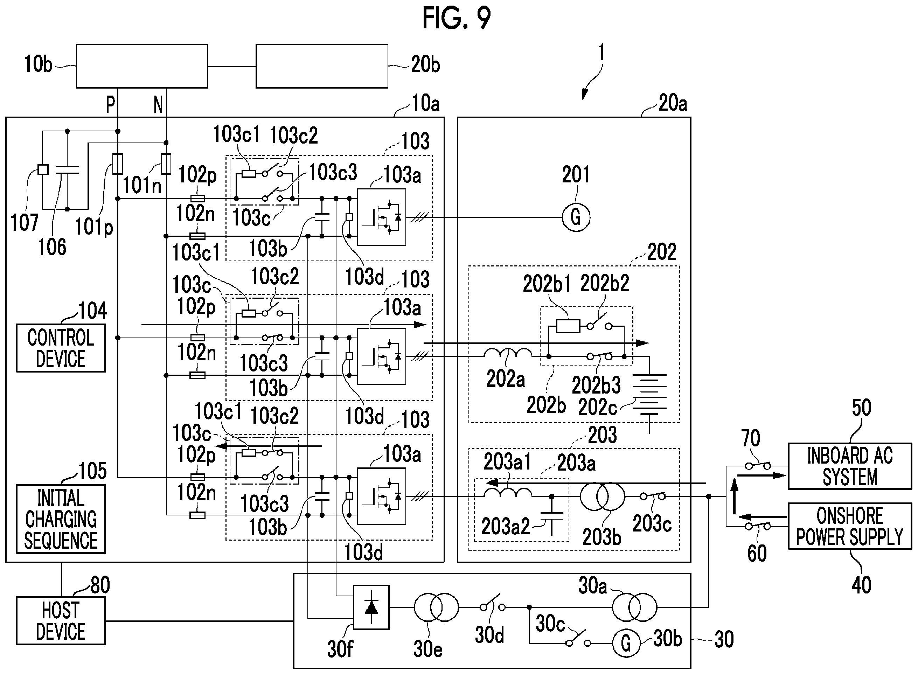

Next, processing after charging the capacitors 103b and 106 of the charging system 1 will be described with reference to Figs. 9 to 11.

Fig. 9 is a diagram showing a first example of processing performed by a charging system 1 according to the embodiment of the present disclosure.

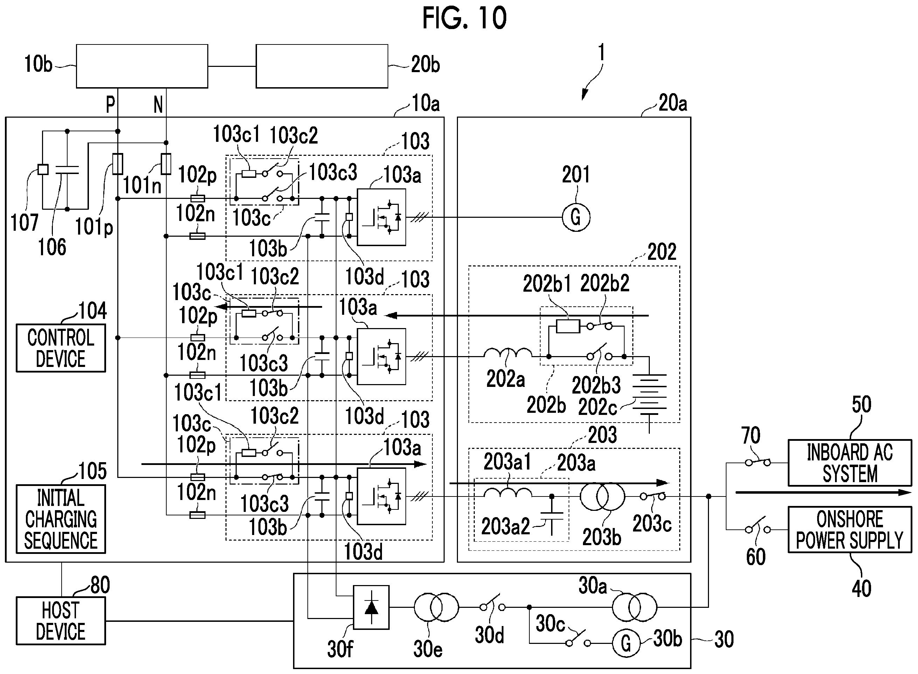

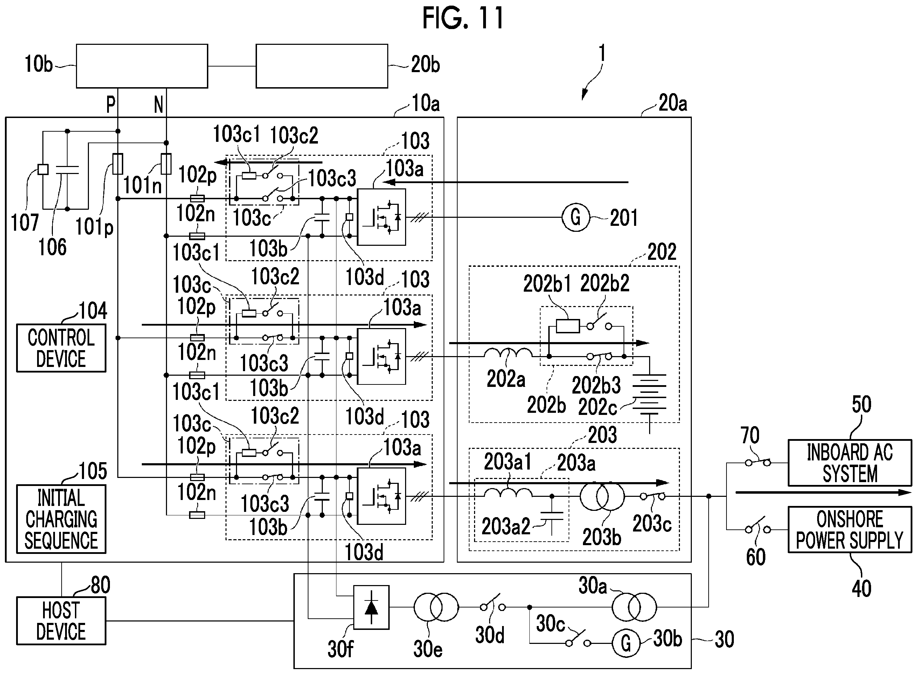

Fig. 10 is a diagram showing a second example of processing performed by a charging system 1 according to the embodiment of the present disclosure. Fig. 11 is a diagram showing a third example of processing performed by a charging system 1 according to the embodiment of the present disclosure.

First, processing performed by the charging system 1 illustrated in Fig. 9 will be described.

Fig. 9 illustrates processing of causing a current to flow from the onshore power supply 40 to the direct current micro grid 10a via the voltage conversion device 203 that is a load and charging the battery 202c with the current. In this case, the host device 80 controls the switching elements 60, 70, 202b3, and 203c to be in the ON state and controls the switching element 202b2 to be in the OFF state. Further, under the control of the host device 80, the control device 104 controls the switching element 103c2 to be in the ON state and the switching element 103c3 to be in the OFF state in the power converter 103 whose load is the voltage conversion device 203. Further, under the control of the host device 80, the control device 104 controls the switching element 103c2 to be in the OFF state and the switching element 103c3 to be in the ON state in the power converter 103 whose load is the charging device 202. As a result, a current flows from the onshore power supply 40 to the battery 202c via the voltage conversion device 203 and the direct current microgrid 10a. The battery 202c is charged by this current.

Next, processing performed by the charging system 1 illustrated in Fig. 10 will be described.

Fig. 10 illustrates processing of causing a current to flow from the charging device 202 to the inboard AC system 50 via the voltage conversion device 203 that is a load. In this case, the host device 80 controls the switching elements 70 and 202b2 to be in the ON state and controls the switching elements 60 and 202b3 to be in the OFF state. Further, under the control of the host device 80, the control device 104 controls the switching element 103c2 to be in the ON state and the switching element 103c3 to be in the OFF state in the power converter 103 whose load is the charging device 202. Further, under the control of the host device 80, the control device 104 controls the switching element 103c2 to be in the OFF state and the switching element 103c3 to be in the ON state in the power converter 103 whose load is the voltage conversion device 203. As a result, a current flows from the battery 202c to the inboard AC system 50 via the direct current microgrid 10a and the voltage conversion device 203. That is, power can be supplied to the inboard AC system 50.

Next, processing performed by the charging system 1 illustrated in Fig. 11 will be described.

Fig. 11 shows processing of causing a current to flow from the generator 201 to the inboard AC system 50 via the voltage conversion device 203 that is a load and charging the battery 202c in the charging device 202. In this case, the host device 80 controls the switching elements 70, 202b3, and 203c to be in the ON state and controls the switching elements 60 and 202b2 to be in the OFF state. Further, under the control of the host device 80, the control device 104 controls the switching element 103c3 to be in the ON state and the switching element 103c2 to be in the OFF state in the power converter 103 whose load is the charging device 202. Further, under the control of the host device 80, the control device 104 controls the switching element 103c2 to be in the OFF state and the switching element 103c3 to be in the ON state in the power converter 103 whose load is the voltage conversion device 203. As a result, a current flows from the generator 201 to the battery 202c via the direct current microgrid 10a. As a result, a current flows from the generator 201 to the inboard AC system 50 via the direct current microgrid 10a and the voltage conversion device 203. That is, power can be supplied to the inboard AC system 50.

### (Operations and Effects)

The charging system 1 according to the embodiment of the present disclosure has been described above.

A charging system 1 includes a first fuse 101p having a first terminal connected to positive electrode wiring P of a bus to which another cooperated direct current microgrid 10b is connected and a second terminal connected to the positive electrode wiring P of the bus to which a plurality of power converters 103 are connected via a plurality of fuses 102p, a second fuse 101n having a first terminal connected to negative electrode wiring N of the bus to which the other direct current microgrid 10b is connected and a second terminal connected to the negative electrode wiring N of the bus to which the plurality of power converters 103 are connected via a plurality of fuses 102n, and a first capacitor 106 having a first terminal connected to the positive electrode wiring P of the bus to which the other direct current microgrid 10b is connected, a second terminal connected to the negative electrode wiring N of the bus to which the other direct current microgrid 10b is connected, and a capacitance capable of cutting at least one of the first fuse 101p and the second fuse 101n, in which each of the plurality of power converters 103 includes a bridge circuit 103a that generates alternating current power from direct current power supplied by the positive electrode wiring P of the bus to which the plurality of power converters 103 are connected and the negative electrode wiring N of the bus to which the plurality of power converters 103 are connected, a second capacitor 103b that is provided parallel to an input terminal of the bridge circuit 103a and that smooths the direct current power, a first switching element 103c3 that is provided between the positive electrode wiring P of the bus to which the plurality of power converters 103 are connected and the bridge circuit 103a, and a first path that is provided parallel to the first switching element 103c3 and that has a second switching element 103c2 and a resistor 103c1 connected in series with the second switching element 103c2, and the charging system 1 further includes a charging circuit 30 that is connected between both terminals of the second capacitor 103b of at least one of the plurality of power converters 103 and that charges the second capacitor 103b when the first switching element 103c3 and the second switching element 103c2 are turned off.

As a result, in the charging system 1, the first capacitor 106 is charged, and cooperation between the direct current microgrid 10a and the load 20a becomes possible.

Therefore, the capacitor 106 in the direct current microgrid 10a can also be charged from the load 20a. As a result, it is possible to improve charging of capacitors 103b and 106 in a direct current microgrid 10a in the presence of bus tie capacitor 106.

### <Modification Example of Embodiment>

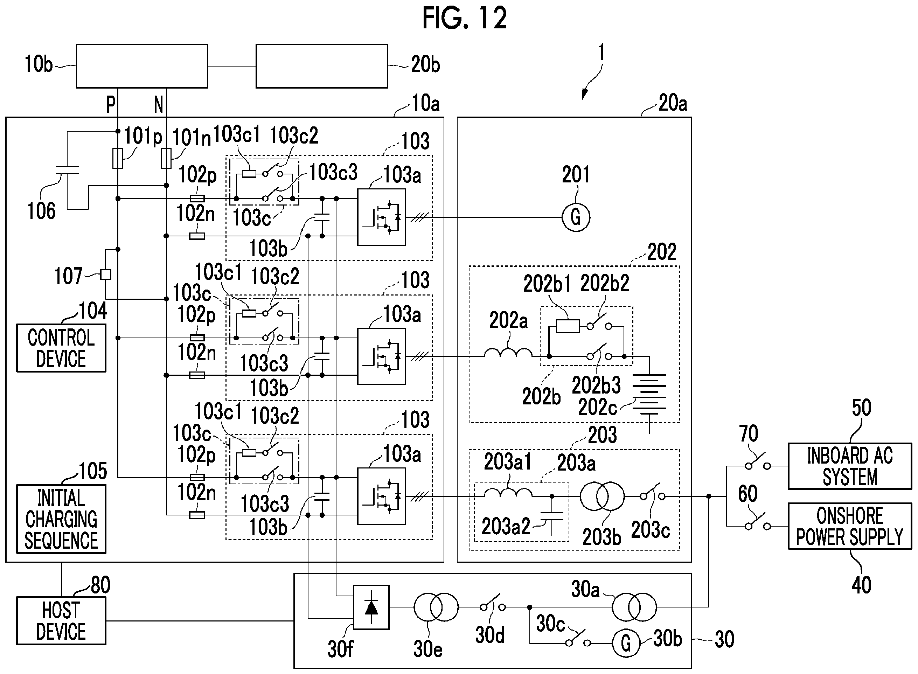

Fig. 12 is a diagram showing an example of a configuration of a charging system 1 according to a modification example of the embodiment of the present disclosure.

In the charging system 1 according to the modification example of the embodiment of the present disclosure, the first terminal and the second terminal of the first capacitor 106 may be connected to each other via a bus tie fuse 101n (second fuse 101n) as illustrated in Fig. 12. In the charging system 1 according to the modification example of the embodiment of the present disclosure, the voltage sensor 107 may acquire the potential difference between both ends of the capacitor 106 (that is, the voltage of the capacitor 106) detected by the voltage sensor 107 via the bus tie fuse 101n.

As for the processing in the embodiment of the present disclosure, the order of the processing may be changed within a range in which appropriate processing is performed.

Each of the storage unit or the storage device (including a register and a latch) in the embodiment of the present disclosure may be provided anywhere within a range in which appropriate information is transmitted and received.

Further, a plurality of the storage units or the storage devices may be present in places within a range in which appropriate information is transmitted and received, and may distribute and store data.

Although the embodiments of the present disclosure have been described, the charging system 1, the direct current microgrids 10a and 10b, the host device 80, the control device 104, the initial charging sequence 105, and other control devices described above may have a computer system therein.

The procedures of the above-mentioned kinds of processing are stored in a computer-readable recording medium in a form of a program, and the above-mentioned kinds of processing are performed by the computer reading and executing this program. A specific example of the computer is shown below.

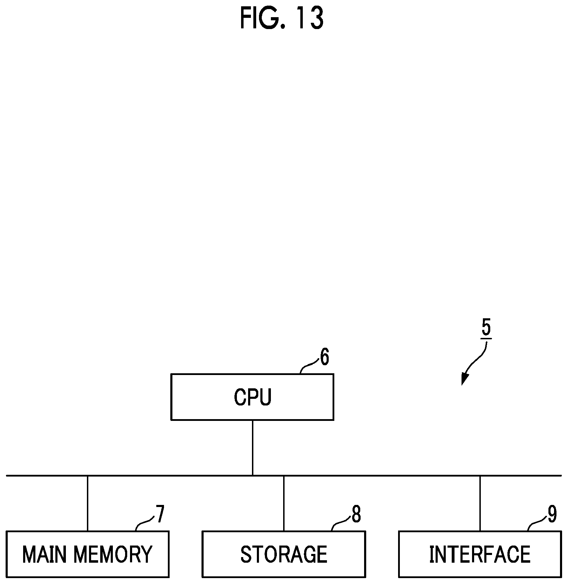

Fig. 13 is a schematic block diagram showing a configuration of a computer according to at least one embodiment.

As shown in Fig. 13, a computer 5 includes a CPU 6, a main memory 7, a storage 8, and an interface 9. For example, each of the charging system 1, the direct current microgrids 10a and 10b, the host device 80, the control device 104, the initial charging sequence 105, and other control devices described above is mounted on the computer 5. An operation of each processing unit described above is stored in the storage 8 in the form of a program. The CPU 6 reads the program from the storage 8, loads the program into the main memory 7, and executes the above process according to the program. Further, the CPU 6 secures a storage area corresponding to each of the above-mentioned storage units in the main memory 7 according to the program.

Examples of the storage 8 include a hard disk drive (HDD), a solid state drive (SSD), a magnetic disk, an optical magnetic disk, a compact disc read only memory (CD-ROM), a digital versatile disc read only memory (DVD-ROM), a semiconductor memory, and the like.

The storage 8 may be an internal medium directly connected to a bus in the computer 5 or may be an external medium connected to the computer 5 via an interface 9 or via a communication line. Further, when this program is distributed to the computer 5 by using the communication line, the computer 5, in which the program is distributed, may load the program in the main memory 7 and execute the above process. In at least one embodiment, the storage 8 is a non-temporary tangible storage medium.

Further, the above program may implement some of the above-mentioned functions.

Further, the program may be a file, a so-called difference file (difference program), that can implement the above-mentioned functions in combination with a program already recorded in a computer system.

Although some embodiments of the present disclosure have been described, these embodiments are examples and do not limit the scope of the disclosure.

These embodiments may be subject to various additions, various omissions, various replacements, and various changes without departing from the gist of the disclosure.

### <Additional Notes>

The charging system 1, the charging method, and the program described in each embodiment of the present disclosure are recognized as follows, for example.

(1) A charging system 1 according to a first aspect includes
   a first fuse 101p having a first terminal connected to positive electrode wiring P of a bus to which another cooperated direct current microgrid 10b is connected and a second terminal connected to the positive electrode wiring P of the bus to which a plurality of power converters 103 are connected via a plurality of fuses 102p,
   a second fuse 101n having a first terminal connected to negative electrode wiring N of the bus to which the other direct current microgrid 10b is connected and a second terminal connected to the negative electrode wiring N of the bus to which the plurality of power converters 103 are connected via a plurality of fuses 102n, and
   a first capacitor 106 having a first terminal connected to the positive electrode wiring P of the bus to which the other direct current microgrid 10b is connected, a second terminal connected to the negative electrode wiring N of the bus to which the other direct current microgrid 10b is connected, and a capacitance capable of cutting at least one of the first fuse 101p and the second fuse 101n,
   in which each of the plurality of power converters 103 includes
      a bridge circuit 103a that generates alternating current power from direct current power supplied by the positive electrode wiring P of the bus to which the plurality of power converters 103 are connected and the negative electrode wiring N of the bus to which the plurality of power converters 103 are connected,
      a second capacitor 103b that is provided parallel to an input terminal of the bridge circuit 103a and that smooths the direct current power,
      a first switching element 103c3 that is provided between the positive electrode wiring P of the bus to which the plurality of power converters 103 are connected and the bridge circuit 103a, and
      a first path that is provided parallel to the first switching element 103c3 and that has a second switching element 103c2 and a resistor 103c1 connected in series with the second switching element 103c2, and
   the charging system 1 further includes a charging circuit 30 that is connected between both terminals of the second capacitor 103b of at least one of the plurality of power converters 103 and that charges the second capacitor 103b when the first switching element 103c3 and the second switching element 103c2 are turned off.

In the charging system 1, the first capacitor 106 is charged in the charging system 1, and the direct current microgrid 10a and the load 20a can cooperate with each other.

Therefore, the capacitor 106 in the direct current microgrid 10a can also be charged from the load 20a. As a result, it is possible to improve charging of capacitors 103b and 106 in a direct current microgrid 10a in the presence of bus tie capacitor 106.

(2) A charging system 1 according to a second aspect is the charging system 1 of (1),
in which the first terminal and the second terminal of the first capacitor 106 may be connected via the second fuse 101n.

This allows the charging system 1 to improve the charging of the first capacitor 106 of the various connections.

(3) A charging system 1 according to a third aspect is the charging system 1 of (1) or (2), and may further include
a load of the power converter 103 that charges the first capacitor 106 via the first path when charging of the second capacitor 103b is completed.

This allows the charging system 1 to improve the charging of the first capacitor 106.

(4) A charging system 1 according to a fourth aspect is the charging system 1 of (3),
in which the load may execute predetermined processing based on control via a host device 80 when charging of the first capacitor 106 is completed.

Thus, the charging system 1 can immediately perform a normal operation.

(5) A charging method according to a fifth aspect includes, via a charging system 1 including
a first fuse 101p having a first terminal connected to positive electrode wiring P of a bus to which another cooperated direct current microgrid 10b is connected and a second terminal connected to the positive electrode wiring P of the bus to which a plurality of power converters 103 are connected via a plurality of fuses 102p,
a second fuse 101n having a first terminal connected to negative electrode wiring N of the bus to which the other direct current microgrid 10b is connected and a second terminal connected to the negative electrode wiring N of the bus to which the plurality of power converters 103 are connected via a plurality of fuses 102n, and
a first capacitor 106 having a first terminal connected to the positive electrode wiring P of the bus to which the other direct current microgrid 10b is connected, a second terminal connected to the negative electrode wiring N of the bus to which the other direct current microgrid 10b is connected, and a capacitance capable of cutting at least one of the first fuse 101p and the second fuse 101n,
in which each of the plurality of power converters 103 includes
   a bridge circuit 103a that generates alternating current power from direct current power supplied by the positive electrode wiring P of the bus to which the plurality of power converters 103 are connected and the negative electrode wiring N of the bus to which the plurality of power converters 103 are connected,
   a second capacitor 103b that is provided parallel to an input terminal of the bridge circuit 103a and that smooths the direct current power,
   a first switching element 103c3 that is provided between the positive electrode wiring P of the bus to which the plurality of power converters 103 are connected and the bridge circuit 103a, and
   a first path that is provided parallel to the first switching element 103c3 and that has a second switching element 103c2 and a resistor 103c1 connected in series with the second switching element 103c2,
charging the second capacitor 103b when the charging system 1 is connected between both terminals of the second capacitor 103b of at least one of the plurality of power converters 103 and the first switching element 103c3 and the second switching element 103c2 are turned off.

In the charging method, the first capacitor 106 is charged in the charging system 1, and the direct current microgrid 10a and the load 20a can cooperate with each other.

Therefore, the capacitor 106 in the direct current microgrid 10a can also be charged from the load 20a. As a result, it is possible to improve charging of capacitors 103b and 106 in a direct current microgrid 10a in the presence of bus tie capacitor 106.

(6) A program according to a sixth aspect causes a charging circuit 30 of a charging system 1 including
a first fuse 101p having a first terminal connected to positive electrode wiring P of a bus to which another cooperated direct current microgrid 10b is connected and a second terminal connected to the positive electrode wiring P of the bus to which a plurality of power converters 103 are connected via a plurality of fuses 102p,
a second fuse 101n having a first terminal connected to negative electrode wiring N of the bus to which the other direct current microgrid 10b is connected and a second terminal connected to the negative electrode wiring N of the bus to which the plurality of power converters 103 are connected via a plurality of fuses 102n, and
a first capacitor 106 having a first terminal connected to the positive electrode wiring P of the bus to which the other direct current microgrid 10b is connected, a second terminal connected to the negative electrode wiring N of the bus to which the other direct current microgrid 10b is connected, and a capacitance capable of cutting at least one of the first fuse 101p and the second fuse 101n,
in which each of the plurality of power converters 103 includes
   a bridge circuit 103a that generates alternating current power from direct current power supplied by the positive electrode wiring P of the bus to which the plurality of power converters 103 are connected and the negative electrode wiring N of the bus to which the plurality of power converters 103 are connected,
   a second capacitor 103b that is provided parallel to an input terminal of the bridge circuit 103a and that smooths the direct current power,
   a first switching element 103c3 that is provided between the positive electrode wiring P of the bus to which the plurality of power converters 103 are connected and the bridge circuit 103a, and
   a first path that is provided parallel to the first switching element 103c3 and that has a second switching element 103c2 and a resistor 103c1 connected in series with the second switching element 103c2, to execute
charging the second capacitor 103b when the charging circuit 30 is connected between both terminals of the second capacitor 103b of at least one of the plurality of power converters 103 and the first switching element 103c3 and the second switching element 103c2 are turned off.

In the program, the first capacitor 106 is charged in the charging system 1, and the direct current microgrid 10a and the load 20a can cooperate with each other.

Therefore, the capacitor 106 in the direct current microgrid 10a can also be charged from the load 20a. As a result, it is possible to improve charging of capacitors 103b and 106 in a direct current microgrid 10a in the presence of bus tie capacitor 106.

### Industrial Applicability

According to a charging system, a charging method, and a program according to the present disclosure, it is possible to improve charging of a capacitor in a direct current microgrid when a bus tie capacitor is present.

### Reference Signs List

1: charging system
5: computer
6: CPU
7: main memory
8: storage
9: interface
10a, 10b: direct current microgrid
20a, 20b: load
30: charging circuit
30b: generator
30a, 30e: AC-AC converter
30c, 30d, 60, 70, 103c2, 103c3, 202b2, 202b3, 203c: switching element
101p, 101n, 102p, 102n: fuse
103: power converter
103a: bridge circuit
103b, 106: capacitor
103c1, 202b1: resistor

## Claims

1. A charging system comprising:
a first fuse having a first terminal connected to positive electrode wiring of a bus to which another cooperated direct current microgrid is connected and a second terminal connected to the positive electrode wiring of the bus to which a plurality of power converters are connected via a plurality of fuses;
a second fuse having a first terminal connected to negative electrode wiring of the bus to which the other direct current microgrid is connected and a second terminal connected to the negative electrode wiring of the bus to which the plurality of power converters are connected via a plurality of fuses; and
a first capacitor having a first terminal connected to the positive electrode wiring of the bus to which the other direct current microgrid is connected, a second terminal connected to the negative electrode wiring of the bus to which the other direct current microgrid is connected, and a capacitance capable of cutting at least one of the first fuse and the second fuse,
wherein each of the plurality of power converters includes
a bridge circuit that generates alternating current power from direct current power supplied by the positive electrode wiring of the bus to which the plurality of power converters are connected and the negative electrode wiring of the bus to which the plurality of power converters are connected,
a second capacitor that is provided parallel to an input terminal of the bridge circuit and that smooths the direct current power,
a first switching element that is provided between the positive electrode wiring of the bus to which the plurality of power converters are connected and the bridge circuit, and
a first path that is provided parallel to the first switching element and that has a second switching element and a resistor connected in series with the second switching element, and
the charging system further comprises a charging circuit that is connected between both terminals of the second capacitor of at least one of the plurality of power converters and that charges the second capacitor when the first switching element and the second switching element are turned off.

2. The charging system according to Claim 1,
wherein the first terminal and the second terminal of the first capacitor are connected via the second fuse.

3. The charging system according to Claim 1 or 2, further comprising:
a load of the power converter that charges the first capacitor via the first path when charging of the second capacitor is completed.

4. The charging system according to Claim 3,
wherein the load executes predetermined processing based on control via a host device when charging of the first capacitor is completed.

5. A charging method comprising:
via a charging system including
a first fuse having a first terminal connected to positive electrode wiring of a bus to which another cooperated direct current microgrid is connected and a second terminal connected to the positive electrode wiring of the bus to which a plurality of power converters are connected via a plurality of fuses,
a second fuse having a first terminal connected to negative electrode wiring of the bus to which the other direct current microgrid is connected and a second terminal connected to the negative electrode wiring of the bus to which the plurality of power converters are connected via a plurality of fuses, and
a first capacitor having a first terminal connected to the positive electrode wiring of the bus to which the other direct current microgrid is connected, a second terminal connected to the negative electrode wiring of the bus to which the other direct current microgrid is connected, and a capacitance capable of cutting at least one of the first fuse and the second fuse,
in which each of the plurality of power converters includes
a bridge circuit that generates alternating current power from direct current power supplied by the positive electrode wiring of the bus to which the plurality of power converters are connected and the negative electrode wiring of the bus to which the plurality of power converters are connected,
a second capacitor that is provided parallel to an input terminal of the bridge circuit and that smooths the direct current power,
a first switching element that is provided between the positive electrode wiring of the bus to which the plurality of power converters are connected and the bridge circuit, and
a first path that is provided parallel to the first switching element and that has a second switching element and a resistor connected in series with the second switching element,
charging the second capacitor when the charging system is connected between both terminals of the second capacitor of at least one of the plurality of power converters and the first switching element and the second switching element are turned off.

6. A program causing a charging circuit of a charging system including
a first fuse having a first terminal connected to positive electrode wiring of a bus to which another cooperated direct current microgrid is connected and a second terminal connected to the positive electrode wiring of the bus to which a plurality of power converters are connected via a plurality of fuses,
a second fuse having a first terminal connected to negative electrode wiring of the bus to which the other direct current microgrid is connected and a second terminal connected to the negative electrode wiring of the bus to which the plurality of power converters are connected via a plurality of fuses, and
a first capacitor having a first terminal connected to the positive electrode wiring of the bus to which the other direct current microgrid is connected, a second terminal connected to the negative electrode wiring of the bus to which the other direct current microgrid is connected, and a capacitance capable of cutting at least one of the first fuse and the second fuse,
in which each of the plurality of power converters includes
a bridge circuit that generates alternating current power from direct current power supplied by the positive electrode wiring of the bus to which the plurality of power converters are connected and the negative electrode wiring of the bus to which the plurality of power converters are connected,
a second capacitor that is provided parallel to an input terminal of the bridge circuit and that smooths the direct current power,
a first switching element that is provided between the positive electrode wiring of the bus to which the plurality of power converters are connected and the bridge circuit, and
a first path that is provided parallel to the first switching element and that has a second switching element and a resistor connected in series with the second switching element, to execute:
charging the second capacitor when the charging circuit is connected between both terminals of the second capacitor of at least one of the plurality of power converters and the first switching element and the second switching element are turned off.
